# EUROPEAN PATENT SPECIFICATION

(11) **EP 3 035 630 B1**
(45) Date of publication and mention of the grant of the patent: **23.05.2018**
(21) Application number: 15173199.9
(22) Date of filing: 22.06.2015
(51) Int. Cl.: H04L 29/06, H04L 12/28, H04W 12/08, H04L 29/08, H04W 12/06

(54) **SECURE LOCAL AREA NETWORK SYSTEM AND ACCESS METHOD THEREOF BASED ON A TRUSTED LIST AND ACCOUNT INFORMATION**
SICHERES LOKALES NETZWERKSYSTEM UND ZUGRIFFSVERFAHREN BASIEREND AUF EINER VERTRAUENSLISTE UND KONTENDATEN
SYSTÈME DE RÉSEAU LOCAL SÉCURISÉ ET PROCÉDÉ D'ACCÈS ASSOCIÉ BASÉ SUR UNE LISTE DE CONFIANCE ET DES INFORMATIONS DE COMPTE

(30) Priority: 19.12.2014 TW 103144554
(43) Date of publication of application: 22.06.2016
(73) Proprietor: Compal Broadband Networks Inc., 114 Taipei City (TW)
(72) Inventor: Su, Jian-Hao, 302 Hsinchu County (TW)
(74) Representative: Becker Kurig Straus

(56) References cited:
- EP-A1- 1 566 920
- EP-A1- 1 643 714
- EP-A1- 1 760 982
- WO-A2-2007/030812
- US-A1- 2012 022 948

## Description

### Field of the Invention

The invention relates to a local area network system and access method, and more particularly, to a convenience and secure local area network system and access method.

### Background of the Invention

A graphical user interface (GUI) is a type of interface that allows users to interact with electronic devices through graphical icons and visual indicators. Unlike conventional command-line interfaces, the actions in a GUI are usually performed through direct manipulation of the graphical elements to enhance the efficiency and ease of use. Consequently, GUIs can be found in various electronic products such as embedded smart devices. And the embedded smart devices can be easily customized with the GUI as the user needs evolve.

In the prior art, one has to enter a user name and password into an embedded smart device to access a GUI of the embedded smart device. However, most users merely log into the GUI and type in the password just after the embedded smart device is bought without further visits to the GUI, and hence the compromised password is rarely used or changed. It might inconvenience the users as they forget the preset user name or password. Moreover, the users must keep the system secure to prevent malicious individuals from employing various schemes to steal user name and password pairs.

EP1643714 A1 discloses an access point programmed with a list of allowable MAC addresses of wireless stations.

Therefore, it is a common goal in the industry to provide a convenience and secure local area network system and access method.

### Summary of the Invention

The present invention aims at providing a convenience and secure local area network system and access method.

This is achieved by a local area network system and an access method according to the independent claims. The dependent claims pertain to corresponding further developments and improvements.

As will be seen more clearly from the detailed description following below, a claimed access method (20) in a local area network system (10) is disclosed herein. An access method (20) comprises the steps of a service node (100) checking an operational information of a first operational node (110 to 140) according to a trusted list (104) to determine whether the operational information complies with the trusted list (104) when the first operational node (110 to 140) attempts to log into the service node (100), and the service node (100) allowing the first operational node (110 to 140) to log into the service node (100) when the operational information complies with the trusted list (104).

In another aspect of the invention, a claimed local area network system (10) is disclosed in the detailed description here below. A local area network system (10) comprises a first operational node (110 to 140) and a service node (100). The service node (100) comprises a storage unit (102), which stores a trusted list (104) and a program code (106). The program code (106) is utilized to instruct the service node (100) to execute the steps of a service node (100) checking an operational information of a first operational node (110 to 140) according to a trusted list (104) to determine whether the operational information complies with the trusted list (104) when the first operational node (110 to 140) attempts to log into the service node (100), and the service node (100) allowing the first operational node (110 to 140) to log into the service node (100) when the operational information complies with the trusted list (104) .

### Brief Description of the Drawings

The invention is further illustrated by way of example with reference to the accompanying drawings. Thereof,
FIG. 1 is a schematic diagram illustrating a local area network system according to an embodiment of the present invention,
FIG. 2 is a flow chart illustrating an access method according to an embodiment of the present invention, and
FIG. 3 is a schematic diagram illustrating a settings dialog interface according to an embodiment of the present invention.

### Detailed Description

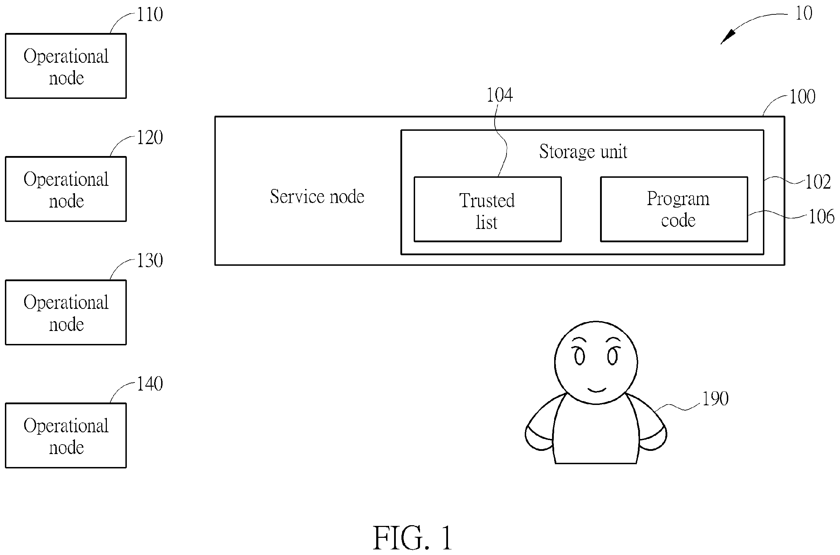

FIG. 1 is a schematic diagram illustrating a local area network system 10 according to an embodiment of the present invention. The local area network system 10 comprises a service node 100 and operational nodes 110 to 140. The operational nodes 110 to 140 are electronic products capable of wired or wireless communication such as a mobile phone, a smart phone, a Personal Digital Assistant (PDA), a tablet, a laptop and a personal computer. Besides, the operational nodes 110 to 140 can be connected to the service node 100 in a wireless or wired connection approach so as to change the settings of the service node 100 or manage the operation thereof. The service node 100 is an electronic device with a Graphical User Interface (GUI) such as a cable modem, a smart refrigerator, a smart air conditioner, a smart TV and other smart household appliances. The service node 100 comprises a storage unit 102 to store a trusted list 104 and a program code 106. The program code 106 is employed to instruct the service node 100 to execute an access method, and hence the service node 100 can determine whether any of the operational nodes 110 to 140 is allowed to log into the service node 100.

In short, when the operational node 110 attempts to log into the service node 100, the service node 100 automatically captures detection information of the operational node 110, which should be operational information of the operational node 110, and verifies the operational information according to the trusted list 104. If the operational information complies with the trusted list 104, the service node 100 lets the operational node 110 log into the service node 100. When the operational information does not comply with the trusted list 104, the service node 100 then asks the operational node 110 to enter account information. Since the service node 100 can automatically identify and authenticate an operational node, it will not bother a user 190 even if the compromised account information is forgotten.

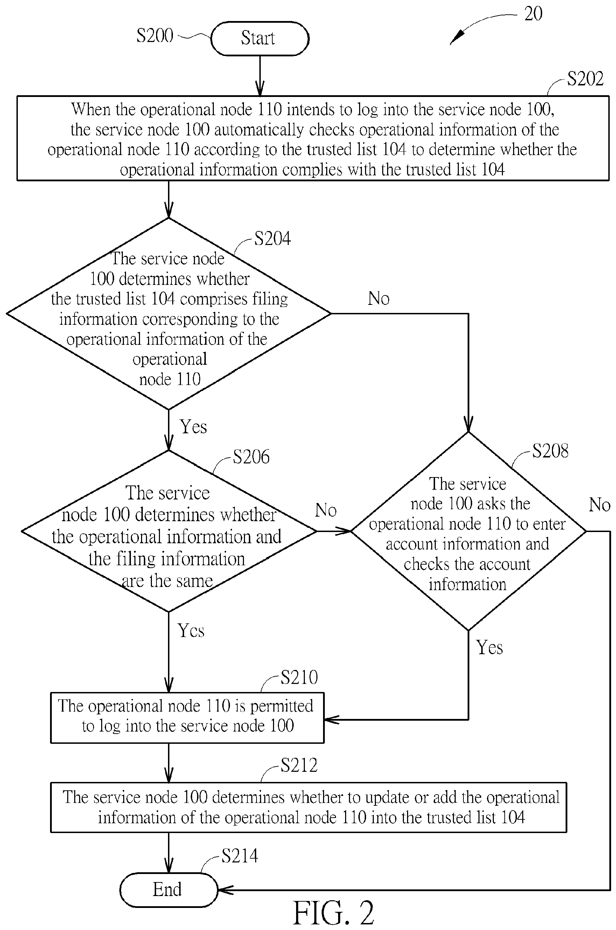

Specifically, when the operational node 110 intends to log into the service node 100, the service node 100 executes an access method 20 as shown in FIG. 2. The access method 20 comprises the following steps:
- Step S200:: Start.
- Step 5202:: When the operational node 110 intends to log into the service node 100, the service node 100 automatically checks operational information of the operational node 110 according to the trusted list 104 to determine whether the operational information complies with the trusted list 104.
- Step 5204:: The service node 100 determines whether the trusted list 104 comprises filing information corresponding to the operational information of the operational node 110. If yes, go to step S206; otherwise, go to step S208.
- Step S206:: The service node 100 determines whether the operational information and the filing information are the same. If yes, go to step S210; otherwise, go to step S208
- Step S208:: The service node 100 asks the operational node 110 to enter account information and checks the account information. If the manual input of the account information is validated, go to step S210; otherwise, go to step S214.
- Step S210:: The operational node 110 is permitted to log into the service node 100.
- Step S212:: The service node 100 determines whether to update or add the operational information of the operational node 110 into the trusted list 104.
- Step S214:: End.

According to the access method 20, when the operational node 110 attempts to access the GUI of the service node 100, the service node 100 automatically checks the operational information of the operational node 110 according to the trusted list 104 to determine whether the operational information complies with the trusted list 104 - that is, there is filing information consistent with the operational information in the trusted list 104. The operational information can comprise a Media Access Control Address (MAC address), a host name and a connection type. Correspondingly, the trusted list 104 comprises a plurality of filing information, and each of the filing information records a MAC address, a host name and a connection type of an operational node that has been authenticated by the service node 100. Therefore, by looking up the trusted list 104 in the service node 100, the service node 100 can determine whether the trusted list 104 comprises filing information corresponding to the operational information of the operational node 110. If the trusted list 104 comprises the corresponding filing information, the service node 100 compares the filing information of the trusted list 104 and the operational information of the operational node 110 to further determine whether the operational information complies with the trusted list 104. When the trusted list 104 comprises the filing information corresponding to the operational information of the operational node 110, and when the operational information is identical to the filing information, the service node 100 regards the operational information verified - namely, the operational information complies with the trusted list 104. Subsequently, the service node 100 allows the operational node 110 to log into the service node 100. When the trusted list 104 does not comprise the corresponding filing information, or when the trusted list 104 comprises the corresponding filing information but the operational information and the filing information do not match, the service node 100 determines that the operational information fails to comply with the trusted list 104. In such a situation, the service node 100 asks the operational node 110 to enter account information, which is the compromised information authenticated by the service node 100 and comprises, for example but not limited thereto, a user name, an email address and a password. As the account information is validated by the operational node 110, the service node 100 permits the operational node 110 to log into the service node 100. After the operational node 110 logs into the service node 100, the operational information of the operational node 110 is updated or added into the trusted list 104 as filing information in order to enhance the convenience of further operational service.

Accordingly, when the operational node 110 attempts to log into the service node 100, the service node 100 automatically examines the operational information of the operational node 110 according to the trusted list 104. If the operational information complies with the trusted list 104, the operational node 110 can directly log into the service node 100 without further typing in any account information. Since the service node 100 can automatically identify and authenticate an operational node, it will not bother a user 190 even if the compromised account information is forgotten.

On the other hand, the trusted list 104 can be set or edited by different approaches. For example, the user 190 can directly log into a settings dialog interface of the service node 100 with built-in administrator account information to arrange or edit the trusted list 104. If the operational information of the operational node 140, which has the built-in administrator account information, is saved in the trusted list 104, the user 190 can log into the settings dialog interface of the service node 100 by using the operational node 140 to make changes to the trusted list 104. Moreover, the user 190 can set the trusted list 104 just after initialization of the service node 100, or after any new operational node logs into the service node 100. Alternatively, the trusted list 104 is periodically re-set. In this case, the service node 100 can adaptively notify the user 190 to arrange the trusted list 104, but not limited thereto.

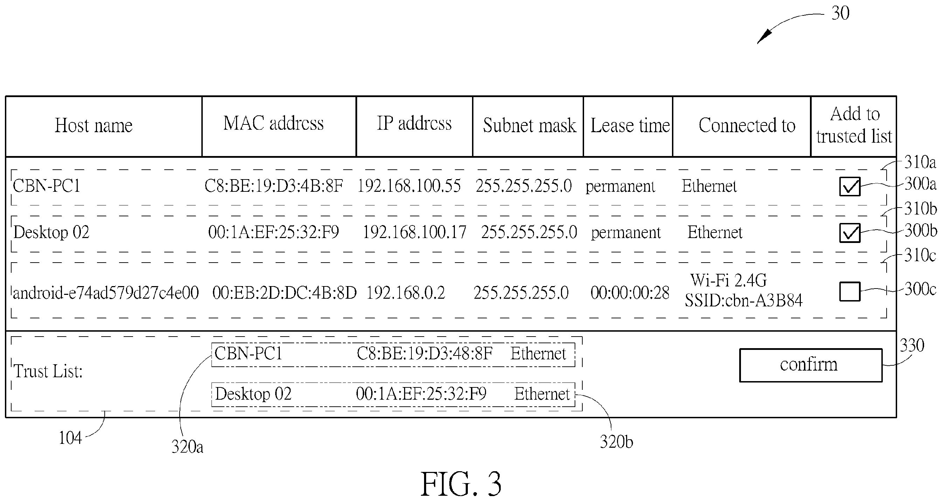

The settings dialog interface of the service node 100 may be properly modified according to different system requirements. For example, FIG. 3 is a schematic diagram illustrating a settings dialog interface 30 according to an embodiment of the present invention. The settings dialog interface 30 is a GUI provided by the service node 100 and comprises the trusted list 104. With the settings dialog interface 30, the user 190 can easily set or edit the trusted list 104. The trusted list 104 is utilized to record all information of the operational node verified by the service node 100 such as filing information 320a, 320b. For example, the trusted list 104 can record the host names of the verified operational nodes 110 and 120 as CBN-PC1 and Desktop02, and record the connection types of the verified operational nodes 110 and 120 as Ethernet. The connection type is how an operational node (e.g., the verified operational nodes 110 and 120) connects to the service node 100, especially, at the time that the operational node is first authenticated by the service node 100. The connection type can be wireless connection approaches such as a local area wireless technology (e.g., Wi-Fi) or wired connection approaches such as Ethernet and HomePlug. In other words, if the verified operational node 110 with the connection type recorded in the trusted list 104 as Ethernet tries to log into the operational node 110 using Wi-Fi, it is considered that the operational information of the operational node 110 does not comply with the filing information 320a of the trusted list 104. As a result, the connection type can preclude malicious individual stealing MAC address and host name of the operational node 110 from pretending to be the operational node 110 to access the service node 100.

The settings dialog interface 30 further lists detection information of all operational node currently connected to the service node 100 such as detection information 310a to 310c, and each of the detection information comprises a host name, a MAC address, an Internet protocol address (IP address), a subnet mask, a lease time, a connection type (in the "connected to" column) and an item box (in the "add to trusted list" column) . For example, the host names of the operational nodes 110, 120 and 130 are CBN-PC1, Desktop02 and android-e74ad579d27c4e00, respectively. In this way, the user 190 can manage services provided by the service node 100. The settings dialog interface 20 also displays item boxes 300a to 300c corresponding to the operational nodes 110, 120 and 130, respectively. Therefore, the user 190 can add an operational node (e.g., the operational nodes 110 and 120) into the trusted list 104 by clicking the item boxes 300a and 300b and remove an operational node (e.g., the operational node 130) from the trusted list 104 by deselecting it in the item box 300c in order to manage the trusted list 104. However, the present invention not limited herein and the management method of the trusted list 104 can be modified according different design considerations. For example, operational information may be added into or removed from the trusted list 104 by dragging the operational information to the trusted list 104 or by directly typing in the operational information into the trusted list 104. When the user 190 saves configuration results by, for example, clicking on a confirm button 330, the operational information of the selected operational nodes (e.g., the operational nodes 110 and 120) would be listed as filing information in the trusted list 104 (e.g., the filing information 320a, 320b), and the storage unit 102 of the service node 100 updates the filing information of the trusted list 104 for further usage.

The local area network system 10 shown in FIG. 1, the access method 20 shown in FIG. 2 and the settings dialog interface 30 shown in FIG. 3 are exemplary embodiments of the invention, and those skilled in the art can make alternations and modifications accordingly. For example, the operational information is not limited to a MAC address, a host name or a connection type and can be any detection information which can be identified and authenticated. The connection type can be Wi-Fi connection, Ethernet connection and/or HomePlug connection, but not limited thereto.

In the prior art, users have to manually key in account information to log into the service node 100. However, most users merely log into the service node 100 and enter the account information for the first time without further visits to the service node 100, and hence the compromised account information is rarely used or changed. It might inconvenience the users when they forget the preset account information. Moreover, the users must keep the system secure to prevent malicious individuals from employing various schemes to steal the account information.

In comparison, when the operational node of the present invention attempts to log into the service node, the service node automatically examines the operational information of the operational node according to the trusted list. If the operational information complies with the trusted list, the operational node can directly log into the service node without further manual input of any account information. Since the service node can automatically identify and authenticate an operational node, it will not bother a user even if the compromised account information is forgotten. Moreover, the connection type of the trusted list can preclude malicious individual from pretending to be the operational node to access the service node.

## Claims

1. An access method (20) in a local area network system (10), comprising:
a service node (100) checking an operational information of a first operational node (110 to 140) according to a trusted list (104) to determine whether the operational information complies with the trusted list (104) when the first operational node (110 to 140) attempts to log into the service node (100);
the service node (100) allowing the first operational node (110 to 140) to log into the service node (100) when the operational information complies with the trusted list (104); and
the service node (100) determining whether to add the operational information of the first operational node (110 to 140) into the trusted list (104) after the first operational node (110 to 140) logs into the service node (100);
the step of determining whether the operational information complies with the trusted list (104) comprises:
determining whether the trusted list (104) comprises a filing information (32a, 320b) corresponding to the operational information of the first operational node (110 to 140); and
acknowledging that the operational information complies with the trusted list (104) when the trusted list (104) comprises the fling information (320a, 320b) corresponding to the operational information and the operational information and the filing information (320a, 320b) are consistent.

2. The access method (20) of claim 1, **characterized by** further comprising the service node (100) asking the first operational node (110 to 140) to enter an account information when the operational information fails to comply with the trusted list (104), wherein the account information comprises at least one of a user name, an email address and a password.

3. The access method (20) of any of claims 1-2, **characterized in that** the operational information comprises at least one of a Media Access Control Address, a host name and a connection type.

4. The access method (20) of claim 3, **characterized in that** the connection type is how the first operational node (110 to 140) connects to the service node (100), the connection type is selected from a wireless approach and a wired connection approach, the wireless connection approach comprises a local area wireless technology connection, and the wired connection approach comprises Ethernet connection and HomePlug connection.

5. The access method (20) of claim 1, **characterized in that** the step of determining whether the operational information complies with the trusted list (104) further comprises:
acknowledging that the operational information fails to comply with the trusted list (104) when the trusted list (104) fails to comprise the filing information (320a, 320b) corresponding to the operational information; and
acknowledging that the operational information fails to comply with the trusted list (104) when the trusted list (104) comprises the filing information (320a, 320b) corresponding to the operational information but the operational information and the filing information (320a, 320b) are not consistent.

6. The access method (20) of any of claims 1-5, **characterized in that** the service node (100) provides a settings dialog interface (30) and the settings dialog interface (30) is a graphical user interface (GUI).

7. The access method (20) of claim 6, **characterized in that** a second operational node (110 to 140) logs into the settings dialog interface (30) with an administrator account information to arrange or edit the trusted list (104).

8. A local area network system (10), comprising:
a first operational node (110 to 140); and
a service node (100), comprising a storage unit (102), wherein the storage unit (102) stores a trusted list (104) and a program code (106), and the program code (106) is utilized to instruct the service node (100) to execute the steps of the access method (20) according to any of claims 1-7.

## Patentansprüche

1. Zugangsverfahren (20) zu einem lokalen Netzwerksystem (10), **dadurch gekennzeichnet, dass** es umfasst:
einen Service-Knoten (100) der eine Betriebs-Information eines ersten Betriebs-Knoten (110 bis 140) gemäß einer vertrauenswürdigen Liste (104) überprüft, um zu bestimmen, ob die Betriebs-Information mit der vertrauenswürdigen Liste (104) übereinstimmt, wenn der erste Betriebs-Knoten (110 bis 140) versucht, sich in den Service-Knoten (100) einzuloggen;
worin der Service-Knoten (100) dem ersten Betriebs-Knoten (110 bis 140) ermöglicht, sich in den Service-Knoten (100) einzuloggen, wenn die Betriebs-Information mit der vertrauenswürdigen Liste (104) übereinstimmt; und
worin der Service-Knoten (100) bestimmt, ob die Betriebs-Information des ersten Betriebs-Knoten (110 bis 140) zu der vertrauenswürdigen Liste (104) hinzugefügt werden soll, nachdem der erste Betriebs-Knoten (110 bis 140) in den Service-Knoten (100) eingeloggt ist;
worin der Schritt des Bestimmens, ob die Betriebs-Information mit der vertrauenswürdigen Liste (104) übereinstimmt, umfasst:
Bestimmen, ob die vertrauenswürdige Liste (104) eine Hinterlegungs-Information (320a, 320b) umfasst, die der Betriebs-Information des ersten Betriebs-Knoten (110 bis 140) entspricht; und
Anerkennen, dass die Betriebs-Information mit der vertrauenswürdigen Liste (104) übereinstimmt, wenn die vertrauenswürdige Liste (104) die Hinterlegungs-Information (320a, 320b) entsprechend der Betriebs-Information umfasst und wenn die Betriebs-Information und die Hinterlegungs-Information (320a, 320b) übereinstimmen.

2. Zugangsverfahren (20) nach Anspruch 1, **dadurch gekennzeichnet, dass** es weiter umfasst, dass der Service-Knoten (100) den ersten Betriebs-Knoten (110 bis 140) fragt, ob ein Konto-Information eingetragen werden soll, wenn die Betriebs-Information nicht mit der vertrauenswürdigen Liste (104) übereinstimmt, worin die Konto-Information mindestens eines umfasst von einem Nutzernamen, einer e-mail Adresse und einem Passwort.

3. Zugangsverfahren (20) nach einem der Ansprüche 1-2, **dadurch gekennzeichnet, dass** die Betriebs-Information mindestens eines umfasst von einer Media Access Control Adresse, einem Host-Namen und einem Verbindungstyp.

4. Zugangsverfahren (20) nach Anspruch 3, **dadurch gekennzeichnet, dass** der Verbindungstyp ist, wie der erste Betriebs-Knoten (110 bis 140) sich mit dem Service-Knoten (100) verbindet, worin der Verbindungstyp ausgewählt ist unter einer Drahtlos-Ansatz und einem Drahtlosverbindungs-Ansatz, worin der Drahtlosverbindungs-Ansatz eine drahtlose Netztechnologie-Verbindung umfasst, und worin ein Kabelverbindungs-Ansatz eine Ethernet-Verbindung und eine HomePlug-Verbindung umfasst.

5. Zugangsverfahren (20) nach Anspruch 1, **dadurch gekennzeichnet, dass** der Schritt des Bestimmens, ob die Betriebs-Information mit der vertrauenswürdigen Liste (104) übereinstimmt, weiter umfasst:
Anerkennen, dass die Betriebs-Information nicht mit der vertrauenswürdigen Liste (104) übereinstimmt, wenn die vertrauenswürdigen Liste (104) die Hinterlegungs-Information (320a, 320b) entsprechend der Betriebs-Information nicht enthält; und
Anerkennen, dass die Betriebs-Information nicht mit der vertrauenswürdigen Liste (104) übereinstimmt, wenn die vertrauenswürdigen Liste (104) die Hinterlegungs-Information (320a, 320b) entsprechend der Betriebs-Information enthält, die Betriebs-Information und die Hinterlegungs-Information (320a, 320b) jedoch nicht konsistent sind.

6. Zugangsverfahren (20) nach einem der Ansprüche 1-5, **dadurch gekennzeichnet, dass** der Service-Knoten (100) eine Einstellungsdialog-Schnittstelle (30) umfasst und dass die Einstellungsdialog-Schnittstelle (30) eine graphische Nutzer-Schnittstelle (GUI) ist.

7. Zugangsverfahren (20) nach Anspruch 6, **dadurch gekennzeichnet, dass** sich ein zweiter Betriebs-Knoten (110 bis 140) in die Einstellungsdialog-Schnittstelle (30) mit einer Administrator Konta-Information einloggt, um die vertrauenswürdigen Liste (104) einzustellen oder auszugeben.

8. Lokales Netzwerksystem (10), **dadurch gekennzeichnet, dass** es umfasst:
einen ersten Betriebs-Knoten (110 bis 140); und
einen Service-Knoten (100), der eine Speichereinheit (102) umfasst, worin die Speichereinheit (102) eine vertrauenswürdige Liste (104) und einen Programm-Code (106) speichert, und worin der Programm-Code (106) dazu verwendet wird, den Service-Knoten (100) dazu zu bringen, die Schritte des Zugangsverfahrens (20) nach einem der Ansprüche 1-7 auszuführen.

## Revendications

1. Procédé d'accès (20) dans un système de réseau local (10), comprenant :
un noeud de service (100) vérifiant une information opérationnelle d'un premier noeud opérationnel (110 à 140) en fonction d'une liste de confiance (104) pour déterminer si l'information opérationnelle est conforme à la liste de confiance (104) lorsque le premier noeud opérationnel (110 à 140) tente de se connecter au noeud de service (100) ;
le noeud de service (100) permettant au premier noeud opérationnel (110 à 140) de se connecter au noeud de service (100) lorsque l'information opérationnelle est conforme à la liste de confiance (104) ; et
le noeud de service (100) déterminant s'il faut ajouter l'information opérationnelle du premier noeud opérationnel (110 à 140) dans la liste de confiance (104) après que le premier noeud opérationnel (110 à 140) se soit connecté au noeud de service (100) ;
l'étape consistant à déterminer si l'information opérationnelle est conforme à la liste de confiance (104) comprend :
déterminer si la liste de confiance (104) comprend une information de classement (320a, 320b) correspondant à l'information opérationnelle du premier noeud opérationnel (110 à 140) ; et
reconnaître que l'information opérationnelle est conforme à la liste de confiance (104) lorsque la liste de confiance (104) comprend l'information de classement (320a, 320b) correspondant à l'information opérationnelle et que l'information opérationnelle et l'information de classement (320a, 320b) sont cohérentes.

2. Procédé d'accès (20) selon la revendication 1, **caractérisé en ce qu'**il comprend en outre le noeud de service (100) demandant au premier noeud opérationnel (110 à 140) d'entrer une information de compte lorsque l'information opérationnelle n'est pas conforme à la liste de confiance (104), l'information de compte comprenant au moins un élément parmi un nom d'utilisateur, une adresse de courrier électronique et un mot de passe.

3. Procédé d'accès (20) selon l'une quelconque des revendications 1 et 2, **caractérisé en ce que** l'information opérationnelle comprend au moins un élément parmi une adresse de commande d'accès au support, un nom d'hôte et un type de connexion.

4. Procédé d'accès (20) selon la revendication 3, **caractérisé en ce que** le type de connexion est la manière dont le premier noeud opérationnel (110 à 140) se connecte au noeud de service (100), le type de connexion est sélectionné parmi une approche sans fil et une approche par connexion filaire, l'approche par connexion sans fil comprend une connexion par technologie sans fil locale, et l'approche par connexion filaire comprend une connexion Ethernet et une connexion HomePlug.

5. Procédé d'accès (20) selon la revendication 1, **caractérisé en ce que** l'étape consistant à déterminer si l'information opérationnelle est conforme à la liste de confiance (104) comprend en outre :
reconnaître que l'information opérationnelle n'est pas conforme à la liste de confiance (104) lorsque la liste de confiance (104) ne comprend pas l'information de classement (320a, 320b) correspondant à l'information opérationnelle ; et
reconnaître que l'information opérationnelle n'est pas conforme à la liste de confiance (104) lorsque la liste de confiance (104) comprend l'information de classement (320a, 320b) correspondant à l'information opérationnelle, mais l'information opérationnelle et l'information de classement (320a, 320b) ne sont pas cohérentes.

6. Procédé d'accès (20) selon l'une quelconque des revendications 1 à 5, **caractérisé en ce que** le noeud de service (100) fournit une interface de dialogue de paramètres (30) et l'interface de dialogue de paramètres (30) est une interface utilisateur graphique (GUI).

7. Procédé d'accès (20) selon la revendication 6, **caractérisé en ce qu'**un second noeud opérationnel (110 à 140) se connecte à l'interface de dialogue de paramètres (30) avec une information de compte administrateur pour agencer ou éditer la liste de confiance (104).

8. Système de réseau local (10), comprenant :
un premier noeud opérationnel (110 à 140) ; et
un noeud de service (100), comprenant une unité de stockage (102), l'unité de stockage (102) stockant une liste de confiance (104) et un code de programme (106), et le code de programme (106) étant utilisé pour ordonner au noeud de service (100) d'exécuter les étapes du procédé d'accès (20) selon l'une quelconque des revendications 1 à 7.
